# EUROPEAN PATENT APPLICATION

(11) **EP 1 059 471 A1**
(43) Date of publication of application: **13.12.2000**
(21) Application number: 00111332.3
(22) Date of filing: 26.05.2000
(51) Int. Cl.: F16H 59/02

(54) **A motor vehicle gear selector rod**

(30) Priority: 10.06.1999 IT TO990499
(71) Applicant: BAVA RICCARDO S.P.A., 10097 Regina Margherita-Collegno (Torino) (IT)
(72) Inventor: Bava, Riccardo, 10146 Torino (IT)
(74) Representative: Gerbino, Angelo

(57) **Abstract**

The motor-vehicle gear-selector rod comprises a substantially cylindrical body, has a spherical pin (26) at one end, and is formed as a unitary part (20) which is hollow throughout its length.

## Description

The present invention relates to a motor-vehicle gear-selector rod comprising a substantially cylindrical body having a spherical pin at one end.

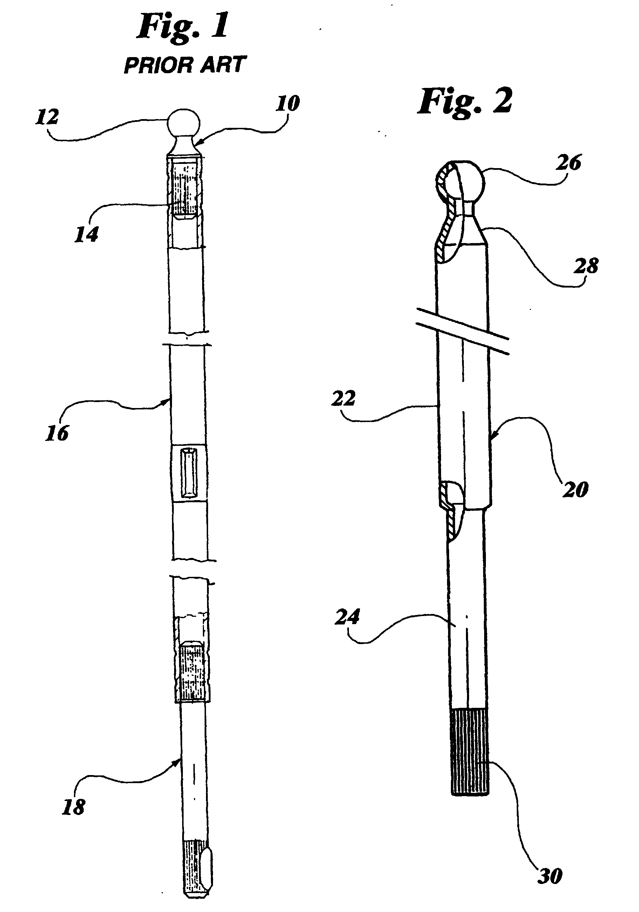

Figure 1 shows an example of a conventional selector rod of this type.

In detail, this known rod comprises a solid spherical pin 10 formed by a spherical head 12 and by an appendage 14 which is inserted in a hollow end of a tubular element 16. A solid cylinder 18 is inserted in the opposite end of the element 16.

The known rod as a whole is therefore formed by three different metal parts - the spherical pin 10, the tubular element 16, and the cylinder 18 - the assembly of which requires a series of different steps so that it is laborious and has a considerable effect on overall production costs.

The correct operation of the rod in fact requires the longitudinal axes of its three component parts to be perfectly aligned, thus necessitating the use of sophisticated assembly techniques with very tight tolerance margins and accurate quality control procedures.

The object of the present invention is therefore to provide a motor-vehicle gear-selector rod the method of production of which is simplified in comparison with that of known rods.

This object is achieved by means of a rod of the type indicated at the beginning of the present description and characterized in that it is formed as a unitary part which is hollow throughout its length.

According to the present invention, the disadvantages connected with the assembly of several parts and, in particular, the need to keep their longitudinal alignment under strict control, are thus avoided.

Moreover, the rod of the present invention offers the advantage over known rods that it is lighter for a given mechanical strength.

A further subject of the present invention is a method of producing a rod of the above-mentioned type, characterized in that it provides for a semi-finished tubular element to be subjected to a rotary swaging process.

This process has the advantage of ensuring smooth surfaces, tight tolerances, and a low consumption of material, in spite of particularly short processing times. It is also decidedly versatile so that it can easily be adapted for producing, in succession, rods having different dimensional characteristics.

Further advantages and characteristics of the present invention will become clear from the following detailed description, given with reference to the appended drawings provided by way of non-limiting example, in which:
Figure 1, which has already been described, is a partially-sectioned view of a selector rod formed in accordance with the prior art, and
Figure 2 is a partially-sectioned view of a selector rod according to the present invention.

A motor-vehicle gear-selector rod is formed (Figure 2) as a unitary part 20 which is hollow throughout its length. The part 20 comprises a substantially cylindrical body formed by a first portion 22 and by a second portion 24 of smaller diameter than the first portion 22.

The first portion 22 is connected to a spherical pin 26 by means of a conical connecting portion 28 and a short cylindrical portion.

The distal end of the second portion 24 has surface knurling 30.

The rod can be produced, for example, by subjecting a tubular semi-finished element, originally of uniform diameter, to a rotary swaging process.

This process, which is known *per se*, provides for the semi-finished element, in the tubular cavity of which a reference mandrel is inserted, to be moved in a direction parallel to its own axis, through a swaging station. The station is formed by a plurality of shaped segments arranged in a ring around a portion of the path of movement of the semi-finished element. During the processing, these segments perform a reciprocating movement radially relative to the axis of the semi-finished element, combined with a rotary movement about the element. The outer surface of the semi-finished element can thus be compressed to the desired extent and can adopt the final, rotationally symmetrical profile, recessed radially to a greater or lesser extent in its various cross-sections.

Naturally, the principle of the invention remaining the same, the details of construction and forms of embodiment may be varied widely with respect to those described purely by way of example, without thereby departing from its scope.

## Claims

1. A motor-vehicle gear-selector rod comprising a substantially cylindrical body and having a spherical pin (26) at one end, the rod being characterized in that it is formed as a unitary part (20) which is hollow throughout its length.

2. A rod according to Claim 1, characterized in that the substantially cylindrical body comprises a first portion (20) and a second portion (24) of smaller diameter than the first (22), the first portion (22) being connected to the spherical pin (26) by means of a connecting portion (28).

3. A rod according to Claim 2, characterized in that the distal end of the second portion (24) has surface knurling (30).

4. A method of producing a rod according to any one of the preceding claims, characterized in that it provides for a tubular semi-finished element to be subjected to a rotary swaging process.
